# EUROPÄISCHE PATENTSCHRIFT

(11) **EP 3 815 533 B1**
(45) Veröffentlichungstag und Bekanntmachung des Hinweises auf die Patenterteilung: **15.06.2022**
(21) Anmeldenummer: 19205818.8
(22) Anmeldetag: 29.10.2019
(51) Int. Cl.: B01F 27/723, B01F 27/807, B01F 29/85, B01F 35/10, B01F 35/00, A21C 1/02, A21C 1/14

(54) **KNETMASCHINE FÜR NAHRUNGSMITTELTEIGE MIT EINER ABDECKUNG MIT SCHNELLVERSCHLUSS**
KNEADING MACHINE FOR FOOD DOUGH WITH A COVER WITH A QUICK CLOSURE
MACHINE DE PÉTRISSAGE POUR PRODUITS ALIMENTAIRES DOTÉE D'UN COUVERCLE À FERMETURE RAPIDE

(43) Veröffentlichungstag der Anmeldung: 05.05.2021
(73) Patentinhaber: DIOSNA Dierks & Söhne GmbH, 49086 Osnabrück (DE)
(72) Erfinder: HOFFMANN, Frank, 48268 Greven (DE)
(74) Vertreter: Lenzing Gerber Stute

(56) Entgegenhaltungen:
- - -: "Brochure Spiral MD-W line", , 31. Dezember 2018 (2018-12-31), XP055645491, Gefunden im Internet: URL:https://www.eschermixers.com/images/Es cherMixers_MD-MDW-line.pdf [gefunden am 2019-11-22]

## Beschreibung

Die vorliegende Erfindung betrifft eine Knetmaschine für Nahrungsmittelteige mit den Merkmalen des Oberbegriffs des Anspruchs 1.

Knetmaschinen für Teige, insbesondere Backteige, weisen einen Knetbottich unterschiedlicher Größe für Teigmassen von 100 bis 3000 Kg auf, in den jeweils ein motorisch antreibbares Knetwerkzeug zur Durchführung des Knetvorganges hineinragt.

Herkömmlicherweise weist eine solche Knetmaschine ein Gehäuse aus Edelstahl auf. Aus hygienischen und sicherheitsrelevanten Gründen sind bis auf das Knetwerkzeug und den Knetbottich alle Komponenten der Knetmaschine durch das Gehäuse verdeckt. Das Gehäuse ist mehrteilig ausgebildet und mittels Schraubverbindungen an dem Knetmaschinengestell befestigt. Das Gehäuse kann beispielsweise zu Wartungs- oder Reparaturzwecken von Fachpersonal demontiert werden. Das Gehäuse ist so ausgestaltet, dass es einfach von außen zu reinigen ist. Die Reinigung der Knetmaschine erfolgt mit Strahlwasser < 10bar. Dabei wird das Gehäuse von außen abgespritzt. Alternativ erfolgt eine trockene Reinigung durch Abbürsten.

In naher Zukunft werden Knetmaschinen vorzugsweise mit einem sogenannten offenen Konzept auf den Markt gebracht, wie dies laut EHEDG Richtlinie vorgesehen ist. In einem offenen Konzept sind nur noch sicherheitsrelevante Komponenten der Knetmaschine, wie beispielswiese die hydraulischen und/oder elektrischen Antriebe, mit einem Gehäuse verkleidet. Das Knetmaschinengestell an sich ist dabei offengelegt und offen zugänglich. Ziel ist es, für eine optimale Hygiene alle Verunreinigungen sichtbar zu machen und nicht einsehbare Hohlräume zu vermeiden. Bei Knetmaschinengestellen mit verschwenkbarem Kopfteil muss daher zusätzlich eine Sicherheitsvorrichtung vorgesehen werden, die als Einklemmschutz für einen Bediener der Knetmaschine fungiert, denn das Gehäuse deckt nicht mehr die gesamte Knetmaschine ab und der Bediener kann in das Gestell greifen. Die Knetmaschine ist daher alleine aus Sicherheitsgründen bereits anders ausgestaltet als eine herkömmliche Knetmaschine. Auch an die Reinigung werden mit dem offenen Konzept andere Anforderungen gestellt. Denn eine Vielzahl an Oberflächen der Knetmaschine, die in unterschiedlichsten Winkeln zueinander liegen müssen nun gereinigt werden. Das führt dazu, dass die Reinigung deutlich umfangreicher und zeitaufwendiger wird. Die Broschüre "Brochure Spiral MD-W line" veröffentlicht unter https://www.eschermixers.com/images/EscherMixers_MD-MDW-line.pdf , gefunden am 2019-11-22 offenbart eine solche offene Knetmaschine mit rotierendem Bottich und rotierenden Knetwerkzeugen mit einem offenen Gestell gemäß dem Oberbegriff des Anspruch 1.

Es ist daher Aufgabe der vorliegenden Erfindung eine Knetmaschine anzugeben, die ein offenes Konzept aufweist und trotzdem einfach zu reinigen ist.

Diese Aufgabe wird von einer Knetmaschine für Teige mit den Merkmalen des Anspruchs 1 gelöst.

Demnach ist eine Knetmaschine für Nahrungsmittelteige aufweisend ein Knetmaschinengestell mit einem Unterteil und ein an dem Unterteil befestigtes Kopfteil vorgesehen, wobei an dem Unterteil ein Knetbottich anordbar ist und ein Antrieb zur Drehung des Knetbottichs befestigt ist, und wobei an dem Kopfteil ein Knetwerkzeug und ein das Knetwerkzeug antreibender Antrieb gehalten ist, und wobei ausschließlich sicherheitsrelevante Komponenten der Knetmaschine von einem Gehäuse umgeben sind und ein Großteil des Knetmaschinengestells frei liegt, wobei das freiliegende Knetmaschinengestell Streben aufweist, zwischen den jeweils Freiräume gebildet sind, wobei die Knetmaschine eine abnehmbare Abdeckung aufweist, die zumindest einen Großteil der durch das freiliegende Knetmaschinengestell gebildeten Freiräume nach außen hin abdeckt, wobei die Abdeckung mittels schnell und ohne Werkzeug lösbaren Verbindungen an dem Knetmaschinengestell und/oder dem Gehäuse befestigt ist.

Die schnell und ohne Werkzeug abnehmbare Abdeckung erlaubt es, dass die Reinigung der Teigknetmaschine, wie zuvor, auch bei einem offenen Konzept erfolgen kann.

Vorzugsweise ist die Abdeckung aus einem lebensmittelechten, wasserundurchlässigen Material, insbesondere Kunststoff hergestellt.

Es kann vorgesehen sein, dass die Abdeckung eine wiederverschließbare Öffnung aufweist.

Bevorzugt ist die Abdeckung derart gestaltet, dass die Außenseite der Abdeckung mit einer Bürste von außen her einfach zu reinigen ist.

Die schnell lösbaren Verbindungen sind vorzugsweise mittels Reißverschlussverbindung, Klips-Verbindungen, Klettband-Verbindungen, Schnappverschlüssen und/oder sonstige Schnellverschlüssen gebildet.

Die Abdeckung kann sowohl einteilig als auch mehrteilig ausgebildet sein.

Für den Fall, dass die Abdeckung mehrteilig ist, decken die einzelnen Teile der Abdeckung jeweils einen Freiraum zwischen den Streben des Knetmaschinengestells ab.

Es ist vorteilhaft, wenn die Abdeckung zumindest einen Großteil der durch das freiliegende Knetmaschinengestell gebildeten Freiräume nach außen hin abdeckt, so dass nahezu kein Wasser und Staub beim Reinigen der Knetmaschine in einen vom Knetmaschinengestell umgebenen Innenraum dringt.

Vorzugsweise umfassen die sicherheitsrelevanten Komponenten den Antrieb des Knetwerkzeugs.

Das Gehäuse ist bevorzugt aus Stahl, Kunststoff oder GFK gebildet. Die Freiräume können am Kopfteil und/oder am Unterteil ausgebildet sein.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit offenem Konzept, sowie
- Figur 2:: eine räumliche Darstellung der Knetmaschine aus Figur 1 mit einer zusätzlichen schnell lösbaren Abdeckung

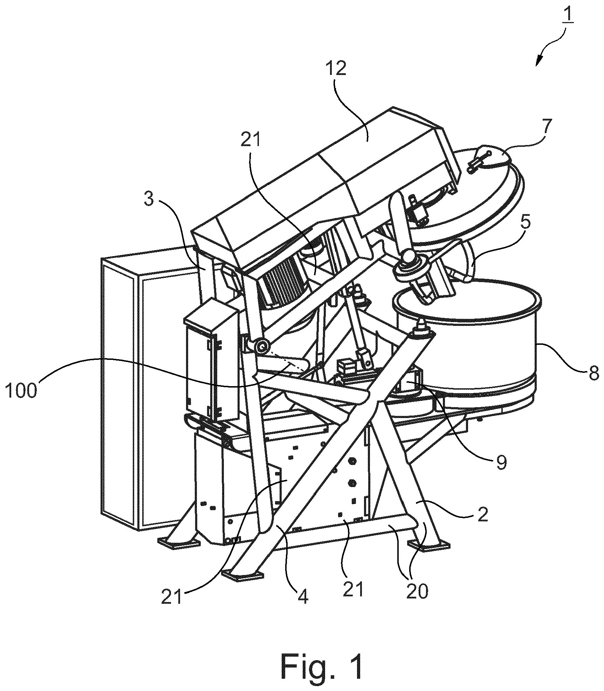

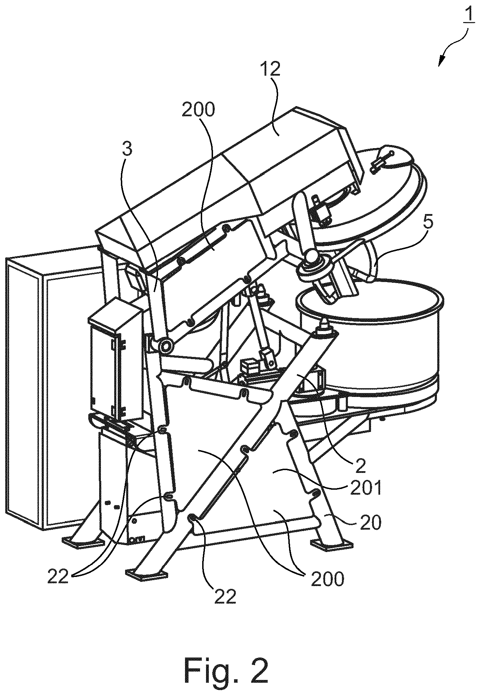

Die in den Figuren 1 und 2 dargestellte Knetmaschine 1 ist zur Verarbeitung eines Nahrungsmittelteigs, insbesondere eines Backteigs ausgebildet. Die Knetmaschine 1 weist ein Knetmaschinengestell 2 auf, dessen Kopfteil 3 um eine Schwenkachse 100 zwischen einer unteren Betriebsstellung und einer oberen Reinigungsstellung gegenüber einem Unterteil 4 verschwenkbar ist. Das Kopfteil 3 trägt das Knetwerkzeug 5, hier dargestellt sind zwei entgegengesetzt drehende Wendelkneter, und den für eine Rotation des Knetwerkzeugs 5 benötigten Antrieb, sowie einen Deckel 7, der zum Abdecken des nach oben hin offenen Knetbottichs 8 vorgesehen ist. Im Unterteil 4 der Knetmaschine 1 sind der Knetbottich 8 und ein Elektromotor 9 angeordnet. Der Elektromotor 9 dreht den Knetbottich 8 um eine nicht dargestellte Rotationsachse gegenüber dem Knetmaschinengestell 2. Im Kopfteil 3 ist weiterhin ein Schwenkantrieb platziert, der als Linearantrieb ausgebildet ist und einen Elektromotor aufweist. Der Schwenkantrieb stützt sich an dem Unterteil 4 in einem Drehgelenk ab. Durch Verfahren des Linearantriebs wird der Abstand vom Kopfteil 3 zu dem Unterteil 4 vergrößert bzw. verkleinert, das in ein Verschwenken des Kopfteils 3 gegenüber dem raumfesten Unterteil 4 um die Schwenkachse 100 resultiert.

Die Knetmaschine 1 weist ein aus Edelstahlblechen gebildetes Gehäuse 12 auf. Das Gehäuse 12 deckt nur den Antrieb des Knetwerkzeugs ab. Das Knetmaschinengestell 2 liegt größtenteils frei und ist von dem Gehäuse 12 nicht umgeben.

An dem Knetmaschinengestell 2 ist eine in Figur 2 dargestellte zusätzliche Abdeckung 200, die als Außenverkleidung dient, befestigt. Die Abdeckung 200 ist schnell lösbar an dem Knetmaschinengestell 2 befestigt. Die Abdeckung 200 ist aus einem lebensmittelechten, wasserundurchlässigen Material, insbesondere Kunststoff oder faserverstärkter Kunststoff gefertigt. Es kann aber auch Edelstahl oder eine Gewebeplane verwendet werden. In der dargestellten Ausführungsform weist die Abdeckung 200 mehrere Platten 201 auf, die jeweils einen durch die Streben 20 des Knetmaschinengestells 2 gebildeten Zwischenraum 21 nach außen hin abdecken. Bevorzugt ersetzt die Abdeckung 200 das herkömmlich verwendete Gehäuse, d. h. sie verschließt die Knetmaschine 1 bis auf den Knetbottich 8 und die Knetwerkzeuge 5 nach außen hin ab. Die Abdeckung 200 weist keine nach innen ragenden Flächen oder Mulden auf und die Anzahl der aneinandergrenzenden Oberflächen der Abdeckung 200 ist auf ein Minimum reduziert, so dass die Abdeckung 200 einfach zu reinigen ist und kein besonders geschultes Personal für die Reinigung benötigt wird. Die Reinigung erfolgt bevorzugt mit Bürsten oder mit Strahlwasser <10bar. Die schnell lösbaren Verbindungen 22 erlauben es die Abdeckung 200 ohne zusätzliches Werkzeug einfach und schnell abzunehmen und anzubringen. Die schnell lösbaren Verbindungen können als Reißverschlussverbindungen, Klips-Verbindungen, Klettband-Verbindungen oder einer Kombination davon ausgebildet sein.

Es können auch andere schnell lösbare Formschlussverbindung verwendet werden, wie beispielswiese Schnappverschlüsse oder sonstige Schnellverschlüsse wie beispielsweise Bajonettverschlüsse oder dergleichen.

Die Abdeckung kann auch durch lösbare Verbindungen wie Schnüre, Knöpfe, Haken und Ösen, mit dem Knetmaschinengestell und/oder dem Gehäuse verbunden sein.

Es ist vorteilhafterweise vorgesehen, dass die Abdeckung aus einem transparenten Material gefertigt ist. Der Bediener kann somit ohne Entfernen der Abdeckung den Zustand der Knetmaschine, insbesondere auch ein Verdrecken der Knetmaschine unter der Abdeckung, kontrollieren. Bei Reinigungs-, Reparatur- oder Wartungsbedarf kann die Abdeckung schnell und einfach von der Knetmaschine gelöst und abgenommen werden. Das Material der Abdeckung ist dabei bevorzugt so leicht gewählt, dass die Abdeckung durch eine Person alleine entfernt werden kann.

Die Abdeckung kann mehrteilig ausgebildet sein, wobei die Teilstücke untereinander ebenfalls bevorzugt mittels schnell lösbaren Verbindungen verbunden sind.

Es kann auch vorgesehen sein, dass die Abdeckung eine widerverschließbare Öffnung aufweist, die es erlaubt durch die Abdeckung zu greifen oder zu gehen und somit das Knetmaschinengestell zugänglich macht, ohne das die gesamte Abdeckung entfernt werden muss.

Die Abdeckung erlaubt es, dass trotz des offenen Konzepts der Knetmaschine die Reinigung wie gewohnt ohne Mehraufwand erfolgen kann. Das Reinigungspersonal muss nicht extra geschult werden und kann das übliche Reinigungsverfahren beibehalten. Die Abdeckung kann zudem günstig hergestellt werden und ist bevorzugt einfach durch eine Person ohne Werkzeug anzubringen und abzunehmen.

## Patentansprüche

1. Knetmaschine (1) für Nahrungsmittelteige aufweisend ein Knetmaschinengestell (2) mit einem Unterteil (4) und ein an dem Unterteil befestigtes Kopfteil, wobei an dem Unterteil (4) ein Knetbottich (8) anordbar ist und ein Antrieb zur Drehung des Knetbottichs befestigt ist, und wobei an dem Kopfteil (3) ein Knetwerkzeug (5) und ein das Knetwerkzeug (5) antreibender Antrieb gehalten ist, und wobei ausschließlich sicherheitsrelevante Komponenten der Knetmaschine (1) von einem Gehäuse (12) umgeben sind und ein Großteil des Knetmaschinengestells (2) frei liegt, wobei das freiliegende Knetmaschinengestell Streben (20) aufweist, zwischen den jeweils Freiräume (21) gebildet sind, **dadurch gekennzeichnet, dass** die Knetmaschine eine abnehmbare Abdeckung (200) aufweist, die zumindest einen Großteil der durch das freiliegende Knetmaschinengestell gebildeten Freiräume nach außen hin abdeckt, wobei die Abdeckung (200) mittels schnell und ohne Werkzeug lösbaren Verbindungen (22) an dem Knetmaschinengestell und/oder dem Gehäuse befestigt ist.

2. Knetmaschine nach Anspruch 1, **dadurch gekennzeichnet, dass** die Abdeckung (200) aus einem lebensmittelechten, wasserundurchlässigen Material hergestellt ist.

3. Knetmaschine nach Anspruch 1 oder 2, **dadurch gekennzeichnet, dass** die Abdeckung (200) aus einem Kunststoff hergestellt ist.

4. Knetmaschine nach einem der vorhergehenden Ansprüche, **dadurch gekennzeichnet, dass** die Abdeckung (200) eine wiederverschließbare Öffnung aufweist.

5. Knetmaschine nach einem der vorhergehenden Ansprüche, **dadurch gekennzeichnet, dass** die Abdeckung (200) derart gestaltet ist, dass die Außenseite der Abdeckung (200) mit einer Bürste von außen her einfach zu reinigen ist.

6. Knetmaschine nach einem der vorhergehenden Ansprüche, **dadurch gekennzeichnet, dass** die schnell lösbaren Verbindungen (22) mittels Reißverschlussverbindung, Klips-Verbindungen, Klettband-Verbindungen, Schnappverschlüssen und/oder sonstige Schnellverschlüssen gebildet sind.

7. Knetmaschine nach einem der vorhergehenden Ansprüche, **dadurch gekennzeichnet, dass** die Abdeckung (200) einteilig ausgebildet ist.

8. Knetmaschine nach einem der vorhergehenden Ansprüche 1 bis 7, **dadurch gekennzeichnet, dass** die Abdeckung (200) mehrteilig ausgebildet ist.

9. Knetmaschine nach Anspruch 8, **dadurch gekennzeichnet, dass** die einzelnen Teile (201) der Abdeckung (200) jeweils einen Freiraum (21) zwischen den Streben (20) abdecken.

10. Knetmaschine nach einem der vorhergehenden Ansprüche 1 bis 9, **dadurch gekennzeichnet, dass** die Abdeckung (200) zumindest einen Großteil der durch das freiliegende Knetmaschinengestell gebildeten Freiräume (21) nach außen hin abdeckt, so dass nahezu kein Wasser und Staub beim Reinigen der Knetmaschine (1) in einen vom Knetmaschinengestell (2) umgebenen Innenraum dringt.

11. Knetmaschine nach einem der vorhergehenden Ansprüche, **dadurch gekennzeichnet, dass** die sicherheitsrelevanten Komponenten den Antrieb des Knetwerkzeugs (5) umfassen.

## Claims

1. Kneading machine (1) for food doughs comprising a kneading machine frame (2) with a lower part (4) and a head part fastened to the lower part, wherein a kneading bowl (8) can be arranged on the lower part (4) and a drive for rotating the kneading bowl is fastened thereto, and wherein a kneading tool (5) and a drive driving the kneading tool (5) are held on the head part (3), and wherein exclusively safety-relevant components of the kneading machine (1) are surrounded by a housing (12) and a major part of the kneading machine frame (2) is exposed, wherein the exposed kneading machine frame comprises struts (20) between which respective free spaces (21) are formed, **characterized in that** the kneading machine comprises a removable cover (200) which covers at least a major part of the free spaces formed by the exposed kneading machine frame towards the outside, wherein the cover (200) is fastened to the kneading machine frame and/or the housing by means of connections (22) which can be released quickly and without tools.

2. The kneading machine according to claim 1, **characterized in that** the cover (200) is made of a food-safe, water-impermeable material.

3. The kneading machine according to claim 1 or 2, **characterized in that** the cover (200) is made of a plastic.

4. The kneading machine according to any one of the preceding claims, **characterized in that** the cover (200) has a resealable opening.

5. The kneading machine according to any of the preceding claims, **characterized in that** the cover (200) is designed in such a way that the outside of the cover (200) can be easily cleaned from the outside with a brush.

6. The kneading machine according to one of the preceding claims, **characterized in that** the quick-release connections (22) are formed by means of zipper connections, clip connections, hook-and-loop tape connections, snap fasteners and/or other quick-release fasteners.

7. The kneading machine according to one of the preceding claims, **characterized in that** the cover (200) is formed in one piece.

8. The kneading machine according to any of the preceding claims 1 to 7, **characterized in that** the cover (200) is formed in multiple parts.

9. The kneading machine according to claim 8, **characterized in that** the individual parts (201) of the cover (200) each cover a free space (21) between the struts (20).

10. The kneading machine according to any one of the preceding claims 1 to 9, **characterized in that** the cover (200) covers at least a majority of the free spaces (21) formed by the exposed kneading machine frame to the outside, so that almost no water and dust penetrate into an interior space surrounded by the kneading machine frame (2) during cleaning of the kneading machine (1).

11. The kneading machine according to one of the preceding claims, **characterized in that** the safety-related components comprise the drive of the kneading tool (5).

## Revendications

1. Pétrisseuse (1) pour des pâtes pour produits alimentaires, dotée d'un bâti (2) comprenant une partie inférieure (4) et une partie de tête fixée à ladite partie inférieure, une cuve de pétrissage (8) pouvant être mise en place sur la partie inférieure (4), et un entraînement étant fixé à cette dernière en vue de faire tourner ladite cuve de pétrissage, sachant qu'un outil de pétrissage (5), et un entraînement menant ledit outil de pétrissage (5), sont retenus sur la partie de tête (3), et sachant qu'un carter (12) entoure exclusivement des composants de la pétrisseuse (1) qui jouent un rôle pertinent en matière de sécurité, et qu'une grande partie du bâti (2) de ladite pétrisseuse est exposée à la vue, lequel bâti de la pétrisseuse, exposé à la vue, est muni d'entretoises (20) entre lesquelles des espaces libres (21) sont respectivement réservés, **caractérisée par le fait que** ladite pétrisseuse est équipée d'un capot amovible (200) qui recouvre, vers l'extérieur, au moins une grande partie des espaces libres formés par le bâti de la pétrisseuse exposé à la vue, ledit capot (200) étant fixé audit bâti de la pétrisseuse, et/ou au carter, au moyen de liaisons (22) libérables rapidement et sans outil.

2. Pétrisseuse selon la revendication 1, **caractérisée par le fait que** le capot (200) est fabriqué en un matériau à compatibilité alimentaire, imperméable à l'eau.

3. Pétrisseuse selon la revendication 1 ou 2, **caractérisée par le fait que** le capot (200) est fabriqué en une matière plastique.

4. Pétrisseuse selon l'une des revendications précédentes, **caractérisée par le fait que** le capot (200) comporte une ouverture refermable.

5. Pétrisseuse selon l'une des revendications précédentes, **caractérisée par le fait que** le capot (200) est conçu de façon telle que la face extérieure dudit capot (200) puisse être nettoyée de manière simple, depuis l'extérieur, à l'aide d'une brosse.

6. Pétrisseuse selon l'une des revendications précédentes, **caractérisée par le fait que** les liaisons (22) à libération rapide sont formées au moyen de liaisons par fermetures à glissière, de liaisons par clipsage, de liaisons par rubans auto-agrippants, de fermetures encliquetables et/ou de fermetures rapides de types autres.

7. Pétrisseuse selon l'une des revendications précédentes, **caractérisée par le fait que** le capot (200) est de réalisation monobloc.

8. Pétrisseuse selon l'une des revendications 1 à 7 précédentes, **caractérisée par le fait que** le capot (200) est réalisé en plusieurs parties.

9. Pétrisseuse selon la revendication 8, **caractérisée par le fait que** les parties individuelles (201) du capot (200) recouvrent, à chaque fois, un espace libre (21) entre les entretoises (20).

10. Pétrisseuse selon l'une des revendications 1 à 9 précédentes, **caractérisée par le fait que** le capot (200) recouvre, vers l'extérieur, au moins une grande partie des espaces libres (21) formés par le bâti de ladite pétrisseuse exposé à la vue, de sorte que quasiment ni eau, ni poussière ne s'insinue, au cours du nettoyage de ladite pétrisseuse (1), dans un espace intérieur entouré par ledit bâti (2) de la pétrisseuse.

11. Pétrisseuse selon l'une des revendications précédentes, **caractérisée par le fait que** les composants jouant un rôle pertinent, en matière de sécurité, incluent l'entraînement de l'outil de pétrissage (5).
